# EUROPEAN PATENT SPECIFICATION

(11) **EP 0 738 955 B1**
(45) Date of publication and mention of the grant of the patent: **03.04.2002**
(21) Application number: 95116418.5
(22) Date of filing: 18.10.1995
(51) Int. Cl.: G06F 3/12

(54) **Print request using a file transfer protocol**
Druckanforderung unter Benutzung eines Dateiübertragungsprotokolls
Demande d'impression utilisant un protocole de transfert de fichier

(30) Priority: 18.04.1995 JP 11654895
(43) Date of publication of application: 23.10.1996
(73) Proprietor: FUJI XEROX CO., LTD., Minato-ku Tokyo 107 (JP)
(72) Inventor: Nakazawa, Toshiya, c/o Fuji Xerox Co., Ltd., Takatsu-ku, Kawasaki-shi, Kanagawa (JP)
(74) Representative: Grünecker, Kinkeldey, Stockmair & Schwanhäusser Anwaltssozietät

(56) References cited:
- PATENT ABSTRACTS OF JAPAN vol. 018, no. 329 (E-1566), 22 June 1994 & JP 06 077994 A (FUJI XEROX CO LTD), 18 March 1994,
- PATENT ABSTRACTS OF JAPAN vol. 018, no. 376 (P-1770), 14 July 1994 & JP 06 103186 A (FUJI XEROX CO LTD), 15 April 1994,
- IBM TECHNICAL DISCLOSURE BULLETIN, vol. 36, no. 8, 1 August 1993, pages 503-504, XP000390309 "DOWN STREAM PRINTING IN A LAN ENVIRONMENT"

## Description

### BACKGROUND OF THE INVENTION

The present invention relates to a print request processing device which enables a host computer not having a print protocol to issue a print request command to a print server, and a print request processing method which operates the print request processing device.

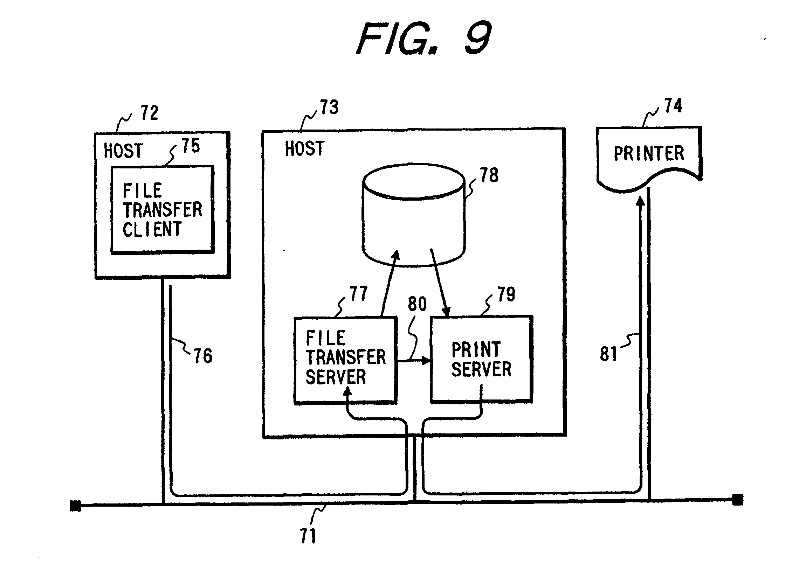

A basic arrangement of a conventional computer system which enables a host computer not having a print protocol to issue a print request command to a print server, is shown in Fig. 9. As shown, the computer system is composed of a host computer (referred to as a host) 72 connected to a network 71, another host computer (referred to as a host) 73 as a print server, and a printer 74. In the computer system, the host 72 sends a file to be printed to the host 73 (as indicated by a data flow line 76) by making use of a file transfer client 75 (e.g., an FTP (file transfer protocol) client), which operates on the host computer 72. In the host 73, a file transfer server 77 (e.g., an FTP server) receives the file from the host 72 and stores it into a file storing means 78, and then issues a print request command 80 to a print server 79. When the print server 79 receives the print request command 80, the file stored in the file storing means 78 by the file transfer server 77 is read out of the file storing means 78, and is transferred to the printer 74 (data flow line 81).

In the computer system thus arranged, even though the host 72 does not have a print protocol, the host 72 is able to transfer a print request command to the host 73 including the print server 79 by using the file transfer protocol. However, the actual computer system has some problems in the ways to generate the print request command which is generated by the file transfer server 77 when it receives the file to be printed, and transferred to the print server 79, or other request commands other than the print request command which the print server 79 receives. Typical examples of those additional request commands are a request to delete stored files, and a list acquisition request for acquiring a list of all the stored files.

Two typical solutions to those problems are proposed. One of the solutions is a gate way system disclosed in Japanese Patent Unexamined Publication No. Hei. 6-103186. The other is a file-transfer-end notifying system disclosed in Japanese Patent Unexamined Publication No. Hei. 1-260554.

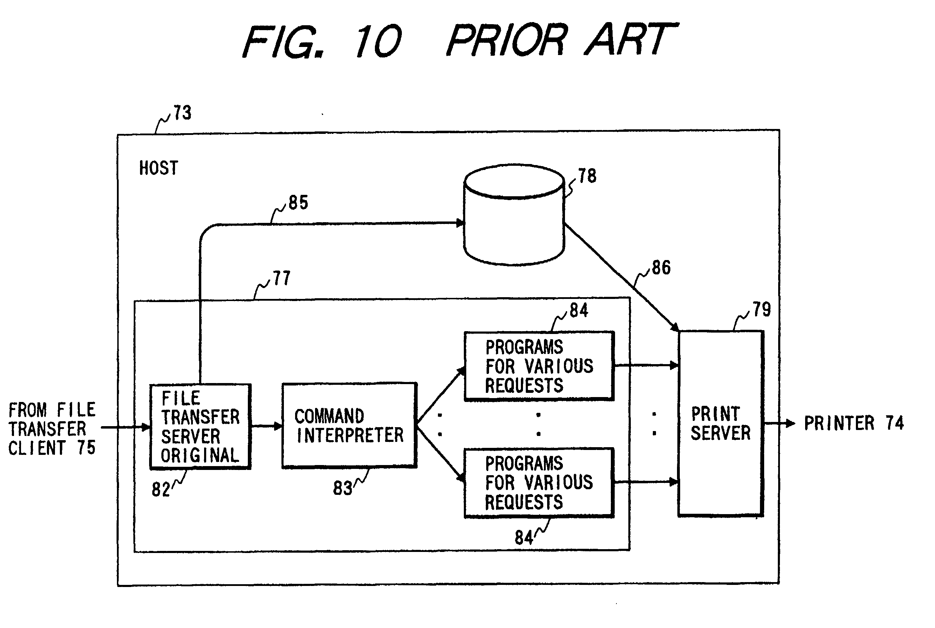

The gate way system of Japanese Patent Unexamined Publication No. Hei. 6-103186 will briefly be described with reference to Fig. 10. In the figure, like reference numerals are used to designate like or equivalent portions in Fig. 9. In the gate way system, a process for generating various request commands to the print server 79 is incorporated into the file transfer server 77 of the host 73. Special meanings are given to the request commands of the file transfer protocol and the process executes a process specified by the request command. As shown, the file transfer server 77 includes a file transfer server original 82, a command interpreter 83, and a plurality of programs corresponding to the respective requests. The file transfer server original 82 receives various request commands from the file transfer client 75 of the host 72. The file transfer server original 82 stores the file into the file storing means 78 (data flow line 85), if the request command indicates that the file must be stored. The file transfer server original 82 transfers a string of the request command to the command interpreter 83. The command interpreter 83 interprets the command for the print server 79, and reads out a program 84 corresponding to the request command. The readout program 84 issues a print request command to the print server 79. When the print server 79 receives the print request from the program 84, it reads the file stored by the file transfer server original 82 in the file storing means 78 (data flow line 86), and transfers it to the printer 74.

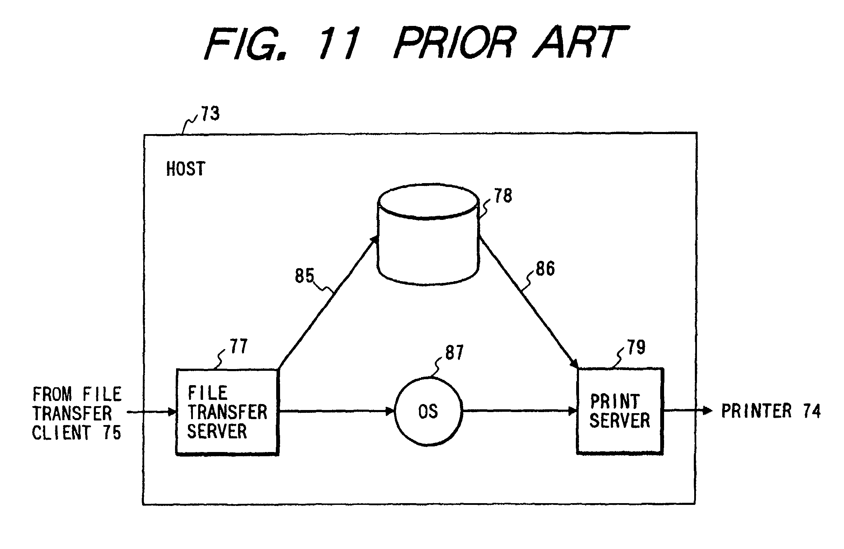

The file-transfer-end notifying system disclosed in Japanese Patent Unexamined Publication No. Hei. 1-260554, will briefly be described with reference to Fig. 11. In the figure, like reference numerals are used to designate like or equivalent portions in Fig. 9. In the file-transfer-end notifying system, the file transfer server 77 per se is little modified, and an OS (operation system) is used. The file transfer server 77 receives a request command from the file transfer client 75, and stores a received file into the file storing means 78 (data flow line 85), if the command indicates that the file must be stored, and notifies an OS 87 that the file transfer ends. The OS 87 sends a file transfer end to the print server 79. The print server 79 reads the file from the file storing means 78 (data flow line 86), and transfers it to the printer 74.

In the first conventional system shown in Fig. 10, the print request command and other request commands can be issued to the print server 79, but original functions of the file transfer server are greatly reduced since the contents of the file transfer server 77 is greatly altered. In the second conventional system shown in Fig. 11, the file transfer server is little altered, but it cannot handle a request command not accompanied by a file transfer, for example a request commond for acquiring a list.

### SUMMARY OF THE INVENTION

Accordingly, an object of the present invention is to provides a print request processing device which enables a host computer not having a print protocol to issue a print request command to a print server by using a file transfer protocol, ensures the original functions of the file transfer server by a little altering the file transfer server, deals with various request commands from the client, and copes with the dynamic additional requirement of print request application programs, and a print request processing method which operates the print request processing device.

The first aspect of the present invention provides a print request processing device using a file transfer server operating such that the file transfer server receives a command from a file transfer client, wherein the received command causes a corresponding program to be executed, and issues various request commands to a print server in accordance with the received command. The print request processing device comprises: command-program table storing means (command-program table) for storing at least one command-program correspondence between a command and a program to be executed; program storing means (plural programs) for storing at least one program to be executed; command-to-program converting means (command-to-program converter) for converting a received command into a program read function which corresponds to the correspondence in the command-program table storing means; and program read means (program read portion) for reading from the program storing means a program specified by the program read function (argument).

In the first aspect of the invention, the command-to-program converting means refers to the command-program table means, finds a command-program correspondence corresponding to a command received from the file transfer client, generates a program read function in accordance with the command-program correspondence, and transfers the program read function to the program read portion. The program read portion specifies a program by the received program read function, and reads out the specified program from the plural programs. Thereafter, the readout program executes a necessary process.

In the second aspect of the present invention, the print request processing device of the first aspect of the invention further comprises command judging means for determining whether or not the received command coincides with the correspondence stored in the command-program table storing means. In the print request processing device, if the command judging means determines that the received command coincides therewith, the command-to-program converting means converts the received command into the program read function in accordance with the command-program correspondence, transfers the program read function to the program read means, and the program read means searches the program storing means for the program specified by the program read function, and reads the specified program from the program storing means.

In the print request processing device of the second aspect of the invention, the command judging means judges the contents of the commond based on the correspondence stored in the command-program table storing means. If the command judging means determines that the command-program correspondence is present, the corresponding (specified) program is read out and the corresponding program executes necessary process.

The third aspect of the present invention specifies the print request processing device of the second aspect of the invention such that when the received command is a print request, the program corresponding to the print command is read out, and a process to issue a print request is left to the program.

The fourth aspect of the present invention specifies the print request processing device of the second aspect of the invention such that when the received command is a command indicative of a list acquisition request, the program corresponding to the list acquisition request command is read out, and a process to issue a list acquisition request is left to the program.

In the fifth aspect of the present invention, the print request processing device of the second aspect of the invention further comprises normal command executing means for executing the received command. In the print request processing device, if the command judging means determines that the command-program correspondence corresponding to the received command is not present in the command-program table storing means, the normal command executing means executes the command.

In the fifth aspect of the present invention, when the print request processing device receives the command which does not correspond to any of the command-program correspondences in the command-program table storing means, the normal command executing means determines that the command does not relate to the print request, and executes a conventional normal process.

The sixth aspect of the present invention specifies the print request processing device of the first aspect of the invention such that the command-program table storing means and the program storing means are provided outside the file transfer server.

According to the sixth aspect of the invention, the command-program table storing means and the program storing means are provided outside the file transfer server. Therefore, the alteration of the file transfer server is minimized, whereby such an original function of the file transfer server as the normal file transfer function is ensured.

The seventh aspect of the present invention specifies the print request processing device of the sixth aspect of the invention such that the contents in the command-program table storing means and the program storing means are reprogrammable.

In the seventh aspect of the present invention, the contents in the command-program table storing means and the program storing means are altered as the user desires or for every product.

The eighth aspect of the present invention provides a print request processing device using a file transfer server operating such that the file transfer server receives a command from a file transfer client, and issues various request commands to a print server in accordance with the received command, the print request processing device comprising: a file transfer server original means for carrying out a normal process; command-program table storing means for storing at least one command-program correspondence between a command indicative of a special process and a program to be executed; program storing means for storing at least one program to be executed; and command-to-program interpreting means for discriminatively recognizing the normal process and the special process, wherein if the received command is indicative of the normal process, the command-to-program interpreting means commissions the file transfer server original means to carry out the normal process, and if the received command is indicative of the special process, the command-to-program interpreting means reads out a corresponding program from the program storing means in accordance with the correspondence in the command-program table storing means, and commissions the readout program to carry out the special process.

The ninth aspect of the present invention specifies the print request processing device of the eighth aspect of the invention such that the file transfer server original means and the commond-to-program interpreting means are included in the file transfer server, and the command-program table storing means and the program storing means are provided outside the file transfer server.

The tenth aspect of the present invention specifies the print request processing device of the ninth asepct of the invention such that the contents in the command-program table storing means and the program storing means are reprogrammable.

The eleventh aspect of the present invention provides a print request processing method in which a command is received from a file transfer client, and various request commands are issued to a print server in accordance with the received command, the print request processing method comprising: a step of determining whether or not the received command corresponds to a program designated in advance using a commande-program table; a step of generating a program read function when the command corresponds to the designated program; a step of reading out the designated program in accordance with the program read function; and a step of executing a process by the designated program.

In the twelfth aspect of the present invention, the print request processing method of the eleventh aspect of the invention further comprises a step of carrying out the normal process when the command does not correspond to the designated program or the program read function fails to read out the designated program.

### BRIEF DESCRIPTION OF THE DRAWINGS

Fig. 1 is a block diagram showing the details of a host computer into which a print request processing device of the present invention is incorporated.

Fig. 2 is a block diagram showing the details of the file transfer server.

Fig. 3 is a flowchart showing a basic operation of the key portion of the print request processing system.

Fig. 4 is a diagram showing an example of a definition file.

Fig. 5 is a table showing some conversions of some FTP commands into corresponding FTP commands and their arguments.

Fig. 6 is a table showing FTP command names.

Fig. 7 a table showing keywords designated in the argument.

Figs. 8(A) to 8(C) are diagrams useful in explaining the process flows of FTP commands transmitted from a file transfer client.

Fig. 9 is a block diagram showing an overall computer system in which a print request processing device is used.

Fig. 10 is a block diagram showing a first conventional print request processing device.

Fig. 11 is a block diagram showing a second conventional print request processing device.

### DETAILED DESCRIPTION OF THE INVENTION

Preferred embodiments of the present invention will be described with reference to the accompanying drawings.

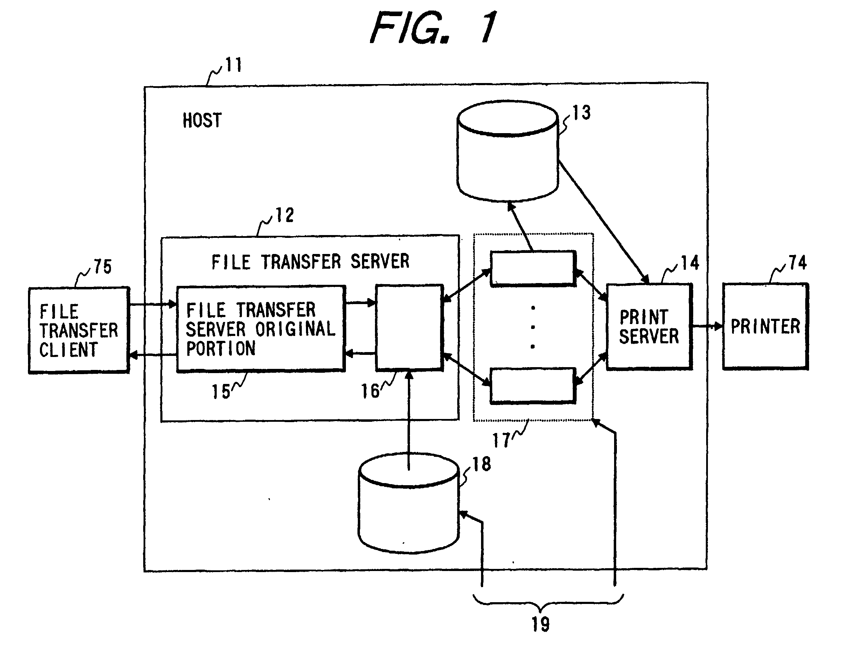

A print request processing device according to the present invention is incorporated into the host computer 73 in the computer system shown in Fig. 9. As already described, the host 73 includes the file transfer server, the file storing means, and the print server. Fig. 1 schematically shows the details of a host computer 11 into which a print request processing device of the present invention is incorporated. In Fig. 1, like reference numerals are used for indicating like or equivalent portions in Fig. 9. The host computer 11 corresponds to the host computer 73 in Fig. 9. The host computer 11 includes a file transfer server 12, a file storage portion 13, and a print server 14.

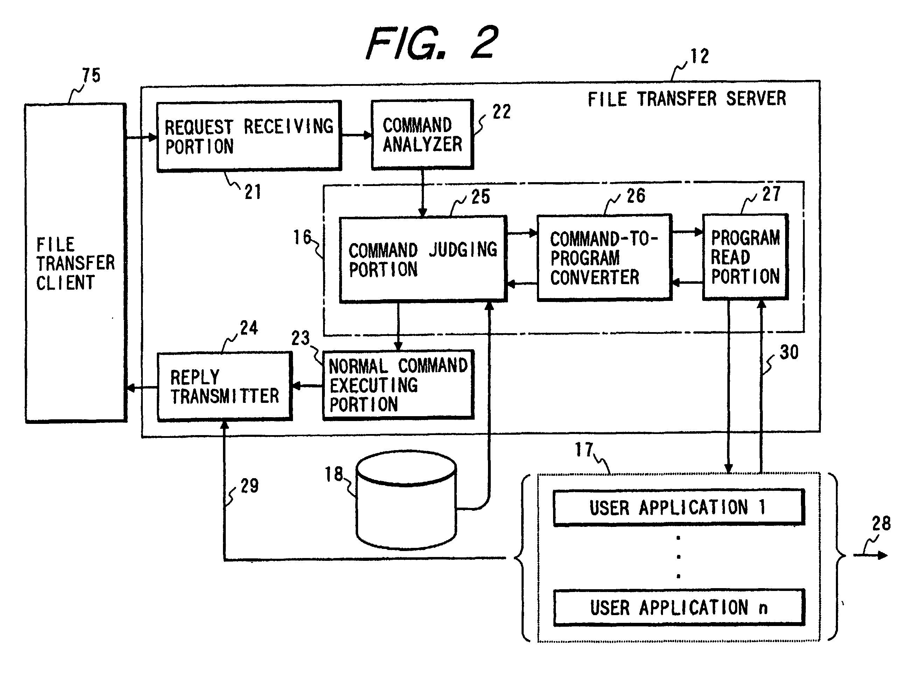

In the host computer 11, the file transfer server 12 receives various request commands from a file transfer client 75 contained in another host computer (e.g., the host 72 in Fig. 9). A print request command is contained in those various request commands. The second host does not have a print protocol. Accordingly, the file transfer protocol (FTP) is used for the print request. The file transfer server 12 includes a file transfer server original portion 15 and a command-to-program interpreting portion 16. The file transfer server original portion 15 processes request commands from the file transfer client 75 in a conventional way. A specific construction of the file transfer server original portion 15 will subsequently be described with reference Fig. 2.

The command-to-program interpreting portion 16 is a portion additionally coupled into the conventional construction. The command-to-program interpreting portion 16 carries out a process to interpret the correspondence between the file transfer commands (FTP commands) from the file transfer client 75 and the corresponding programs. Thus, the file transfer server 12 contains the process to interpret the correspondence between the file transfer commands and the corresponding programs, and does not contain the program for generating various request commands to the print server 14.

As shown in Fig. 1, plural programs 17 for generating various request commands to the print server 14 are provided outside the file transfer server 12. In other words, a storage portion for storing the plural programs 17 is provided. A storage storing a command-program table 18 containing the correspondence between the request commands and the programs 17 for the print server, is provided outside the file transfer server 12. In other words, a storage portion for storing the command-program table 18 is separately provided. The command-to-program interpreting portion 16 in the file transfer server 12 receives a command from the file transfer server original portion 15, and searches the command-program table 18 for a program corresponding to the command (hereinafter referred to as corresponding program). If the corresponding program is found, the command-to-program interpreting portion 16 sends the command to the corresponding program contained in the plural programs 17. The corresponding program receiving the commond examines the contents of the command, and takes an action on the print server 14 on the basis of the result of the examination. For example, it calls the print server 14.

The contents of the programs 17 and the command-program table 18 are reprogrammable as the user desires or according to the product through a manual operation 19 by the user as shown in Fig. 1. More specifically, the contents may be deleted, altered, or added.

A request command generated by the corresponding program in the plural programs 17 is transferred to the print server 14. When the print server 14 receives a print request command from the corresponding program, it reads a necessary file from the file storage portion 13, and transfers the file to the printer 74, thereby causing the printer to print the contents of the file.

The construction of the file transfer server 12 will be described in detail with reference to Fig. 2. The file transfer server original portion 15 in the file transfer server 12 includes a request receiving portion 21, a command analyzer 22, a normal command executing portion 23, and a replay transmitter 24. The command-to-program interpreting portion 16, added to the conventional construction of the file transfer server 12, includes a command judging portion 25, a command-to-program converter 26, and a program read portion 27. An n number of user programs (user application programs) are included in the plural programs 17 provided outside the file transfer server 12.

Referring to Figs. 1 and 2, the file transfer server 12 receives a request command, transmitted from the file transfer client 75, by the file transfer server original portion 15. More specifically, the request receiving portion 21 receives the request command. The request receiving portion 21 transfers the received request command (a string of characters) to the command analyzer 22. The command analyzer 22 analyzes the request command; and transfers the result of the analysis to the command judging portion 25 of the command-to-program interpreting portion 16. The command judging portion 25 searches the command-program table 18 for a program that corresponds to the request command. If the program corresponding to the received command is present, the command-to-program converter 26 creates information to read the corresponding program, and transfers it to the program read portion 27. Upon receipt of the readout information, the program read portion 27 reads the corresponding program from the storage portion storing the plural programs 17. When the file transfer is present, the readout program stores the data of the file into the file storage portion 13 (Fig. 1), and issues a request command to the print server 14 (data flow line 28). The corresponding program as the use application program returns the result of the processing to the file transfer client 75 by way of a data line 29 and the replay transmitter 24.

If the corresponding program is not found in the command-program table 18, the command judging portion 25 issues a command to direct the file transfer server original portion 15 to carry out a normal process. More specifically, the command judging portion 25 issues a related command to the normal command executing portion 23 (Fig. 2). The normal command executing portion 23 executes an original process of the file transfer server 12, and returns the result of the processing to the file transfer client 75 by way of the replay transmitter 24.

Each of the plural programs 17 may reject the request of issuing a request command to the print server 14. When the program rejects the request command issuance, it transfers a reject notify 30 to the normal command executing portion 23 by way of a route of the program read portion 27, the command-to-program converter 26, and the command judging portion 25. Upon receipt of this, the normal command executing portion 23 executes its original process.

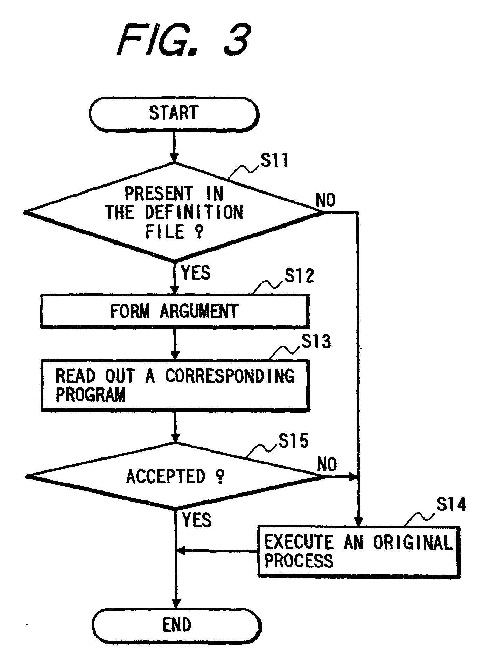

The functions of the command judging portion 25, the command-to-program converter 26, and the program read portion 27 in the file transfer server 12 will be described with reference to a flowchart shown in Fig. 3.

Various request commands from the file transfer client 75 are received by the request receiving portion 21, and transferred to the command analyzer 22 where those commands are analyzed. The request command is composed of a command and file (data) in accordance with the contents of the request. The command and the file are transferred through different paths, respectively. Upon receipt of the request command analysis result from the command analyzer 22, the command judging portion 25 searches a definition file for a command corresponding to the received request command, viz., a statement on the request command (step S11). The definition file is the contents of the command-program table 18. If the corresponding command is found in the definition file, the command-to-program converter 26 generates an argument (step S12). The argument is used for reading the corresponding program. The program read portion 27 reads the corresponding program from the plural programs 17 by using the argument (step S13). If the request command is not found in the definition file, an original process is carried out by the normal command executing portion 23 (step S14).

As for the process for reading out the corresponding program, that is carried out in the step S13, a step S15 checks as to whether the program readout process is accepted or not. If it is accepted, the subsequent process is placed in the hands of the corresponding program read out. If it is rejected, the system control advances to the step S14. The original process is carried out by the normal command executing portion 23.

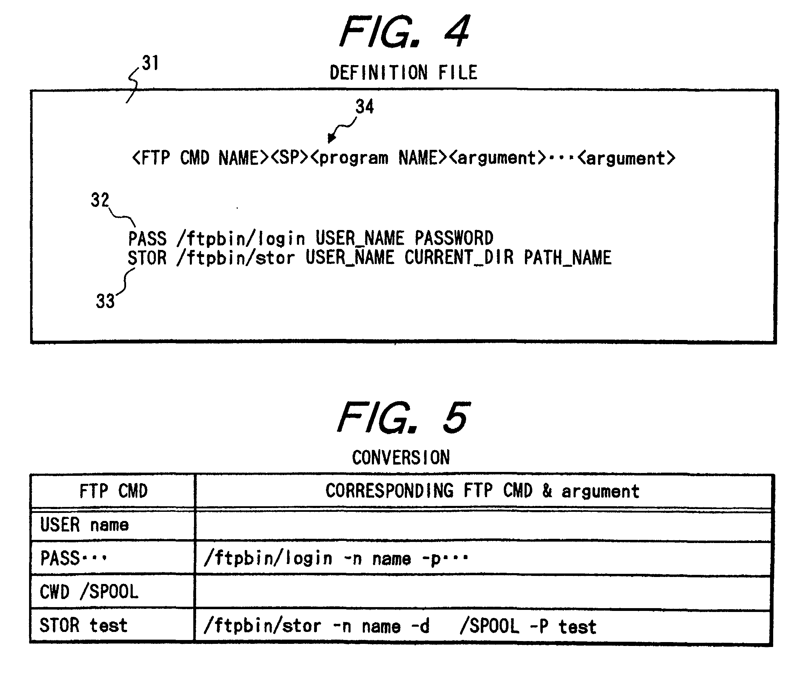

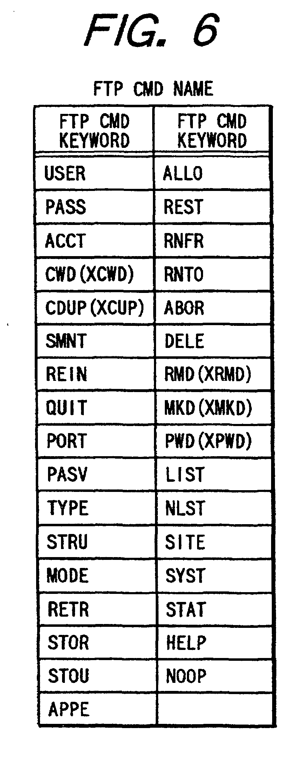

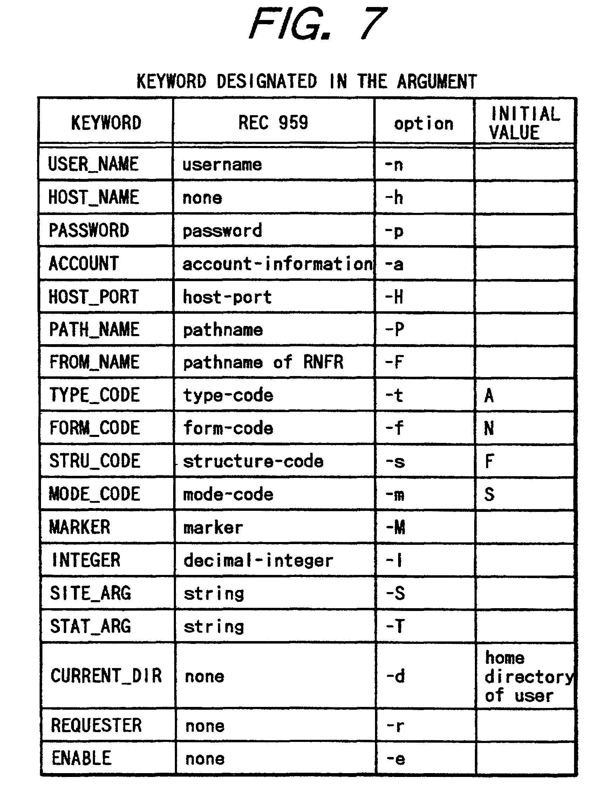

An example of the definition file is shown in Fig. 4. A definition file 31 shown in Fig. 4 contains two statements 32 and 33. A format 34, located in the upper porion of the definition file 31, is for explaining the statements 32 and 33. A string of characters shown in a table of Fig. 7 is described in <FTP CMD name>, which corresponds to an FTP command, in the format 34. In the statement 32, PASS is described in the <FTP CMD name>, and in the statement 33 STOR is described therein. <SP> in the format 34 indicates a space as a punctuation mark. The name of a program for the print server is described in <program name> in the format 34. In the statement 32, "login" is described in the <program name>, and in the statement 33, "stor" is described therein. In the statements 32 and 33, /ftpbin/ indicates a memory location of the corresponging program. Of those arguments, which are transmitted together with an FTP command, only an argument necessary for the program is described in <argument> in the format 34. Keywords designated in the argument are tabulated in Fig. 6. In the examples shown in Fig. 4, the argument is "USER_NAME, PASSWORD" in the statement 32, and USER_NAME, CURRENT_DIR, PATH_NAME in the statement 33.

Assuming that the definition file of Fig. 4 is designated, and that the FTP CMD (FTP commands) come in in the order as indicated in the left side of a table of Fig. 5, from the file transfer client 75, then the following process is carried out.

The FTP command "USER name" has no description on USER in the definition file. Therefore, the command judging portion 25 issues a command to direct the normal command executing portion 23 to carry out a normal process. Then, the normal command executing portion 23 executes a normal FTP process. At this time, the argument "name" is internally stored.

For the FTP command "PASS ***", its statement is contained in the definition file. Then, the command judging portion 25 starts up "/ftpbin/login" as the corresponding program (user application). At this time, "name" and "***" are transferred as the arguments, and the option shown in Fig. 7 is added to them. Thus, the FTP command, "PASS ***", is converted into a corresponding FTP command and its arguments as described in the right side in the table of Fig. 5, by the command judging portion 25 and the command-to-program converter 26.

The FTP command "CWD" has no description in the definition file. Therefore, the command judging portion 25 issues a command to direct the normal command executing portion 23 to carry out a normal process. Then, the normal command executing portion 23 executes a normal FTP process. At this time, the argument "SPOOL" is internally stored.

For the FTP command "STOR test", its statement is contained in the definition file. Then, the command judging portion 25 starts up "/ftpbin/stor" as the corresponding program (user application). At this time, "name" and "/SPOOL" are transferred as the arguments, and the option shown in Fig. 7 is added to them. Thus, the FTP command, "STOR test", is converted into a corresponding FTP command and its arguments as described in the right side in the table of Fig. 5, by the command judging portion 25 and the command-to-program converter 26.

As described above, the command judging portion 25 of the command-to-program interpreting portion 16 refers to the designated contents of the definition file stored as the command-program table 18, and discriminatively recognizes the received command, viz., a normal command or a designated command. If the received command is not designated in the definition file, the file transfer server original portion 15 carries out a normal FTP process. If it is designated in the definition file, the program read portion 27 of the command-to-program interpreting portion 16 reads a program corresponding to the received command from the plural programs 17, located outside the file transfer server 12, and commissions the program to process the subsequent tasks.

Some of the FTP command names tabulated in Fig. 6 will be described. "USER" and "PASS" each indicate "login". "CWD(XCWD)" and "CDUP(XCUP)" indicate memory locations. "QUIT" indicate "end". "TYPE" indicates the transmission of "TEXT" and "BINARY". "RETR" indicates the file transfer from the server to the client. "STOR" indicates the file transfer from the client to the server. "REST" and "RNTO" each indicate the replacement of a file name. "DELE" indicates the deletion of a file. "LIST" indicates the acquisition of a list of files. "NLIST" indicates the acquisition of a list of only file names.

The meanings of keywords designated in the argument, tabulated in Fig. 7, will be given below.
- USER_NAME: user name designated at logon
- HOST_NAME: host name of a client
- PASSWORD: pass word designated at login
- ACCOUNT: account designated at login
- HOST_PORT: port number determined at the file transfer
- PATH_NAME: file name designated by an argument, e.g., STOR
- FROM_NAME: file name designated by RNFR
- TYPE_CODE: code designated by TYPE
- FORM_CODE: code designated by FORM
- STRU_CODE: code designated by STRU
- MODE_CODE: code designated by MODE
- MARKER: code designated by REST
- INTEGER: code designated by ALLO
- SITE_ARG: argument designated by SITE
- START_ARG: argument designated by STAT
- CURRENT_DIR: current directory

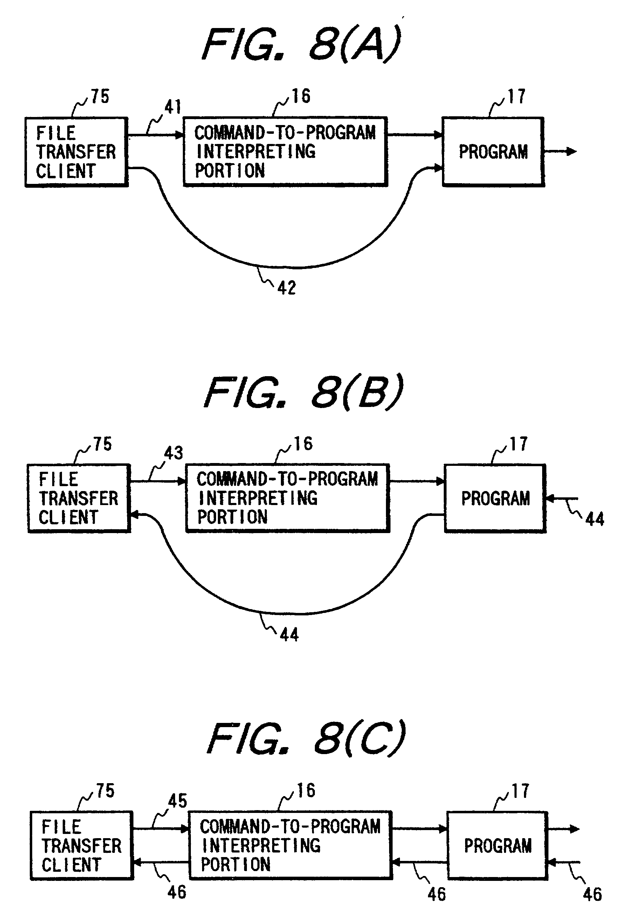

Typical process flows of major FTP commands, which are transmitted from the file transfer client 75, with respect to the file transfer client 75, the command-to-program interpreting portion 16 in the file transfer server 12, and the program storage 17, will be described with reference to Figs. 8(A) to 8(C).

A process flow of the FTP command, "STOR", is shown in Fig. 8(A). The "STOR" is a command for transferring a file, and used for print request. When the command-to-program interpreting portion 16 receives a command "STOR" 41 from the file transfer client 75, it reads out a corresponding program 17. Then, a file 42 is supplied to the program 17 through a route different from the command, which does not include the command-to-program interpreting portion 16. The readout program 17 receives the file 42 and carries out a process to generate a print request.

A process flow of the FTP command, "LIST", is shown in Fig. 8(B). The "LIST" is a command for acquiring list data. When the command-to-program interpreting portion 16 receives a command "LIST" 43 from the file transfer client 75, it reads out a corresponding program 17. Then, the readout program acquires list data 44 relating to the list, and returns the list data 44 to the file transfer client 75 directly by a route without the command-to-program interpreting portion 16.

A process flow of the FTP command, "DELE (CANCEL)", is shown in Fig. 8(C). The "DELE" is a command for deleting a file. When the command-to-program interpreting portion 16 receives a command "DELE" 45 from the file transfer client 75, it reads out a corresponding program 17. Then, the readout program deletes a designated file. Upon completion of the deletion, it receives a deletion-end notification 46, and returns the notification 46 to the file transfer client 75 by way of the command-to-program interpreting portion 16.

As described above, the print request processing device of the present invention is capable of dealing with various services provided by the print server 14 with a little alteration of the file transfer server 12 in the host computer 11. The file transfer server 12 contains the file transfer server original portion 15 as the original function of the file transfer server. Therefore, the normal process can be normally carried out as in the conventional system. When the contents of the command-program table 18, viz., the designations in the definition file, are reprogrammed, and a request issuing program to the print server 14 is prepared in connection of the reprogrammed definitions, the print request processing device may easily deal with the function limits and the function expansion, which are different for each product.

As seen from the foregoing description, the present invention has the following effects.

A host computer, which includes a file transfer server and a print server, further includes a command-to-program interpreting portion, a command-program table, and plural corresponding of programs. Another host computer, which includes a file transfer client, transfers a command by using a file transfer protocol. The command-to-program interpreting portion receives the command, and refers to the command-program table for checking whether or not a program corresponding to the received command is present. If the corresponding program is present, the command-to-program interpreting portion reads out the corresponding program. The readout program issues a print request command to the print server. Therefore, the host not having a print protocol can drive a printer for printing by using a file transfer protocol.

Programs for various processes may be stored in the plural corresponding programs. Therefore, the print request processing device can deal with a request command not accompanied by the file transfer, for example, a request for acquiring list data.

The command-to-program interpreting portion is provided within the file transfer server, while the command-program table and the plural corresponding programs are provided outside the file transfer server. Accordingly, the file transfer server original portion for carrying out a normal process may be provided in the file transfer server. The command-to-program interpreting portion receives a command that is transferred from another host computer, which includes a file transfer client, by using a file transfer protocol, and refers to the command-program table for checking whether or not a program corresponding to the received command is present. If the corresponding program is not present, the command-to-program interpreting portion causes the file transfer server original portion to carry out a normal process. Thus, the original function of the file transfer server can be secured.

The contents of the command-program table and the plural corresponding of programs are reprogrammable as the user desires or according to the product. Further, the command-program table and the plural corresponding programs are provided separately from the file transfer server. Therefore, there is no need of altering the file transfer server when another program is additionally used, and the print request processing device can easily cope with the dynamic requirement of using additional print request application programs.

## Claims

1. A print request processing device using a file transfer server (12) operating such that the file transfer server (12) receives a command from a file transfer client (75), wherein the received command causes a corresponding program to be executed, and wherein various request commands to a print server (14) are issued in accordance with the received command,
**characterized by**
the print request processing device comprising:
command-program table (18) storing means for storing at least one command-program correspondence between a command received and a program (17) to be executed;
program storing means for storing at least one program (17) to be executed;
command-to-program converting means (26) for converting the received command into a program read function corresponding to the command-program correspondence in said command-program table (18) storing means; and
program read means (27) for reading from said program storing means a program (17) specified by the program read function.

2. The print request processing device according to claim 1, further comprising command judging means (25) for determining whether or not the received command coincides with the command-program correspondence, wherein if said command judging means (25) determines that the command coincides with the command-program correspondence, said command-to-program converting means (26) converts the received command into the program read function in accordance with the command-program correspondence, transfers the program read function to said program read means (27), and said program read means (27) reads the corresponding program (17) from said program storing means.

3. The print request processing device according to claim 2, wherein the received command is a print request command, the program corresponding to the print request command is read out, and a process to issue a print request is left to the program.

4. The print request processing device according to claim 2, wherein the received command is a command indicative of a list acquisition request, the program corresponding to the list acquisition request command is read out, and a process to issue a list acquisition request is left to the program.

5. The print request processing device according to claim 2, further comprising normal command executing means (23) for executing the received command, wherein if said command judging means (25) determines that the received command does not coincide with the command-program correspondence, said normal command executing means (23) executes the command.

6. The print request processing device according to claim 1, wherein said command-program table (28) storing means and said program storing means are provided outside said file transfer server (12).

7. The print request processing device according to claim 6, wherein the contents in said command-program table (18) storing means and said program (17) storing means are reprogrammable.

8. A print request processing device using a file transfer server (12) operating such that the file transfer server (12) receives a command from a file transfer client (75), and issues various request commands to a print server (14) in accordance with the received command,
**characterized by**
said print request processing device comprising:
a file transfer server (12) original means for carrying out a normal process;
command-program table (18) storing means for storing at least one correspondence between a command indicative of a special process and a program (17) to be executed;
program storing means for storing at least one program (17) to be executed; and
command-to-program interpreting means (16) for discriminatively recognizing whether the command relates to the normal process or the special process, wherein if the received command is indicative of the normal process, said command-to-program interpreting means (16) commissions the file transfer server (12) original means to carry out the normal process, and if the received command is indicative of the special process, said command-to-program interpreting means (16) reads out a corresponding program (12) from said program storing means in accordance with the command-program correspondence, and commissions the readout program (17) to carry out the special process.

9. The print request processing device according to claim 8, wherein said file transfer server (17) original means and said command-to-program interpreting means (16) are provided within said file transfer server (17), while said command-program table (18) storing means and said program (17) storing means are provided outside said file transfer server (17).

10. The print request processing device according to claim 9, wherein the contents in said command-program table (18) storing means and said program storing means are reprogrammable.

11. A print request processing method in which a command is received from a file transfer client (75), and various request commands are issued to a print server (14) in accordance with the received command,
**characterized by**
said print request processing method comprising:
a step of determining whether or not the received command corresponds to a program (17) designated in advance using a command-program table (18);
a step of generating a program read function when the command corresponds to the designated program (17);
a step of reading out the designated program (17) in accordance with the program read function; and
a step of executing a process by the readout designated program (17).

12. The print request processing method according to claim 11, further comprising a step of carrying out a normal process when the command does not correspond to the designated program (17) or the program read function fails to read out the designated program (17).

13. A print request processing device according to claim 1, wherein the print request processing device is part of a computer system having a first computer (72) serving as a file transfer client (75) and a print server (14).

14. A computer program product comprising code means adapted to perform the steps of claim 11 or claim 12 when said computer program product is run on a computer.

## Patentansprüche

1. Druckanforderungsverarbeitungsvorrichtung unter Verwendung eines Dateiübertragungsservers (12), die derart betrieben wird, dass der Dateiübertragungsserver (12) ein Kommando von einem Dateiübertragungsklienten (75) empfängt, wobei das empfangene Kommando die Ausführung eines korrespondierenden Programms verursacht, und wobei verschiedene Anforderungsprogramme an einen Druckserver (14) entsprechend dem empfangenen Kommando ausgegeben werden,
**dadurch gekennzeichnet, dass**
die Druckanforderungsverarbeitungsvorrichtung umfasst:
- eine Kommando-Programmtabellen-(18)-speichereinrichtung für die Speicherung mindestens einer Kommando-Programm-Korrespondenz zwischen einem empfangenen Kommando und einem auszuführenden Programm (17);
- eine Programm-Speicherungseinrichtung für das Speichern mindestens eines auszuführenden Programms (17);
- eine Kommando-zu-Programm-Wandlungseinrichtung (26) für das Umwandeln des empfangenen Kommandos in eine Programm-Lesefunktion, die mit der Kommando-Programm-Korrespondenz in der Kommando-Programmtabellen-(18)-speichereinrichtung korrespondiert; und
- eine Programm-Leseeinrichtung (27) für das Lesen eines durch die Programm-Lesefunktion spezifizierten Programms (17) von der Programm-Speicherungseinrichtung.

2. Druckanforderungsverarbeitungsvorrichtung nach Anspruch 1, die ferner eine Kommandobewertungseinrichtung (25) enthält für die Bestimmung, ob das empfangene Kommando mit der Kommando-Programm-Korrespondenz übereinstimmt oder nicht, wobei dann, wenn die Kommandobewertungseinrichtung (25) bestimmt, dass das Kommando mit der Kommando-Programm-Korrespondenz übereinstimmt, die Kommando-zu-Programm-Wandlungseinrichtung (26) das empfangene Kommando entsprechend der Kommando-Programm-Korrespondenz in eine Programm-Lesefunktion wandelt, die Programm-Lesefunktion an die Programm-Leseeinrichtung (27) überträgt, und die Programm-Leseeinrichtung (27)das korrespondierende Programm (17) von der Programm-Speicherungseinrichtung liest.

3. Druckanforderungsverarbeitungsvorrichtung nach Anspruch 2, wobei das empfangene Kommando ein Druckanforderungskommando ist, das mit dem Druckanforderungskommando korrespondierende Programm ausgelesen wird, und ein Prozeß zur Ausgabe einer Druckanforderung dem Programm überlassen wird.

4. Druckanforderungsverarbeitungsvorrichtung nach Anspruch 2, wobei das empfangene Kommando ein Kommando ist, das für eine Listenerstellungsanforderung bezeichnend ist, das mit dem Listenerstellungsanforderungskommando korrespondierende Programm ausgelesen wird, und ein Prozeß zur Ausgabe einer Listenerstellungsanforderung dem Programm überlassen wird.

5. Druckanforderungsverarbeitungsvorrichtung nach Anspruch 2, das ferner eine normale Kommandoausführungseinrichtung (23) für die Ausführung des empfangenen Programms enthält, wobei dann, wenn die Kommandobewertungseinrichtung (25) bestimmt, dass das empfangene Kommando nicht mit der Kommando-Programm-Korrespondenz übereinstimmt, die normale Kommandoausführungseinrichtung (23) das Kommando ausführt.

6. Druckanforderungsverarbeitungsvorrichtung nach Anspruch 1, wobei die Kommando-Programmtabellen-(18)-speichereinrichtung und die Programm-Speicherungseinrichtung außerhalb des Dateiübertragungsservers (12) vorgesehen ist.

7. Druckanforderungsverarbeitungsvorrichtung nach Anspruch 6, wobei die Inhalte in der Kommando-Programmtabellen-(18)-speichereinrichtung und der Programm-(17)-speichereinrichtung reprogrammierbar sind.

8. Druckanforderungsverarbeitungsvorrichtung unter Verwendung eines Dateiübertragungsservers (12), die derart betrieben wird, dass der Dateiübertragungsserver (12) ein Kommando von einem Dateiübertragungsklienten (75) empfängt, und verschiedene Anforderungsprogramme an einen Druckserver (14) entsprechend dem empfangenen Kommando ausgibt,
**dadurch gekennzeichnet, dass**
die Druckanforderungsverarbeitungsvorrichtung umfasst:
- eine Originaleinrichtung des Dateiübertragungsservers (12) für die Ausführung eines normalen Prozesses;
- eine Kommando-Programmtabellen-(18)-speichereinrichtung für die Speicherung mindestens einer Korrespondenz zwischen einem für einen speziellen Prozeß bezeichnendem Kommando und einem auszuführenden Programm (17);
- eine Programm-Speicherungseinrichtung für das Speichern mindestens eines auszuführenden Programms (17);
- eine Kommando-zu-Programm-Interpretierungseinrichtung (16) für das unterscheidende Erkennen, ob sich das Kommando auf den normalen Prozeß oder auf den speziellen Prozeß bezieht, wobei dann, wenn das empfangene Kommando für den normalen Prozeß bezeichnend ist, die Kommando-zu-Programm-Interpretierungseinrichtung (16) die Originaleinrichtung des Dateiübertragungsservers (12) beauftragt, den normalen Prozeß auszuführen, und wenn das empfangene Kommando für den speziellen Prozeß bezeichnend ist, die Kommando-zu-Programm-Interpretierungseinrichtung (16) entsprechend der Kommando-Programm-Korrespondenz ein korrespondierendes Programm (17) aus der Programm-Speicherungseinrichtung ausliest, und das ausgelesene Programm (17) beauftragt, den speziellen Prozeß auszuführen.

9. Druckanforderungsverarbeitungsvorrichtung nach Anspruch 8, wobei die Originaleinrichtung des Dateiübertragungsservers (12) und die Kommando-zu-Programm-Interpretierungseinrichtung (16) innerhalb des Dateiübertragungsservers (12) vorgesehen sind, aber die Kommando-Programmtabellen-(18)-speichereinrichtung und die Programm-(17)-speichereinrichtung außerhalb des Dateiübertragungsservers (12) vorgesehen sind.

10. Druckanforderungsverarbeitungsvonichtung nach Anspruch 9, wobei die Inhalte in der Kommando-Programmtabellen-(18)-speichereinrichtung und der Programm-(17)-speichereinrichtung reprogrammierbar sind.

11. Druckanforderungsverarbeitungsverfahren, in dem ein Kommando von einem Dateiübertragungsklienten (75) empfangen wird, und verschiedene Anforderungskommandos entsprechend dem empfangenen Kommando an einen Druckserver (14) ausgegeben werden,
**dadurch gekennzeichnet, dass**
das Druckanforderungsverarbeitungsverfahren enthält:
- einen Schritt der Bestimmung, ob das empfangene Kommando mit einem Programm (17) korrespondiert oder nicht, welches Im Vorhinein unter Verwendung einer Kommando-Programmtabelle (18) bezeichnet ist;
- einen Schritt der Erzeugung einer Programm-Lesefunktion, wenn das Kommando mit dem bezeichneten Programm (17) korrespondiert;
- einen Schritt des Auslesens des bezeichneten Programms (17) entsprechend der Programm-Lesefunktion; und
- einen Schritt der Ausführung eines Prozesses durch das ausgelesene, bezeichnete Programm (17).

12. Druckanforderungsverarbeitungsverfahren nach Anspruch 11, das ferner einen Schritt des Ausführens eines normalen Prozesses enthält, wenn das Kommando nicht mit dem bezeichneten Programm (17) korrespondiert oder die Programm-Lesefunktion dabei versagt, das bezeichnete Programm (17) auszulesen.

13. Druckanforderungsverarbeitungsvorrichtung nach Anspruch 1, wobei die Druckanforderungsverarbeitungsvorrichtung Teil eines Computer-Systems ist mit einem ersten Computer (72), der als ein Dateiübertragungsklient dient, und mit einem Druckserver (14).

14. Computerprogrammprodukt, das eine Codeeinrichtung enthält, die angepasst ist, die Schritte von Anspruch 11 oder Anspruch 12 durchzuführen, wenn das Computerprogrammprodukt auf einem Computer abläuft.

## Revendications

1. Dispositif de traitement de demande d'impression utilisant un serveur de transfert de fichier (12) fonctionnant de telle sorte que le serveur de transfert de fichier (12) reçoit une commande provenant d'un client de transfert de fichier (75), dans lequel la commande reçue amène un programme correspondant à être exécuté, et dans lequel différentes commandes de demande vers un serveur d'impression (14) sont délivrées en fonction de la commande reçue,
**caractérisé par**
le dispositif de traitement de demande d'impression qui comporte :
des moyens de stockage de table commande-programme (18) destinés à stocker au moins une correspondance commande-programme entre une commande reçue et un programme (17) devant être exécuté;
des moyens de stockage de programme destinés à stocker au moins un programme (17) devant être exécuté;
des moyens de conversion commande-programme (26) destinés à convertir la commande reçue en une fonction de lecture de programme correspondant à la correspondance commande-programme dans lesdits moyens de stockage de table commande-programme (18); et
des moyens de lecture de programme (27) destinés à lire dans lesdits moyens de stockage de programme un programme (17) spécifié par la fonction de lecture de programme.

2. Dispositif de traitement de demande d'impression selon la revendication 1, comportant en outre des moyens d'estimation de commande (25) destinés à déterminer si la commande reçue coïncide ou non avec la correspondance commande-programme, et si les moyens d'estimation de commande (25) déterminent que la commande coïncide avec la correspondance commande-programme, lesdits moyens de conversion commande-programme (26) convertissent la commande reçue en fonction de lecture de programme suivant la correspondance commande-programme, transfèrent la fonction de lecture de programme vers lesdits moyens de lecture de programme (27), et lesdits moyens de lecture de programme (27) lisent le programme (17) correspondant dans lesdits moyens de stockage de programme.

3. Dispositif de traitement de demande d'impression selon la revendication 2, dans lequel la commande reçue est une commande de demande d'impression, le programme correspondant à la commande de demande d'impression est lu, et un traitement destiné à délivrer une demande d'impression est laissé au programme.

4. Dispositif de traitement de demande d'impression selon la revendication 2, dans lequel la commande reçue est une commande indicative d'une demande d'acquisition de liste, le programme correspondant à la commande de demande d'acquisition de liste est lu, et un traitement destiné à délivrer une demande d'acquisition de liste est laissé au programme.

5. Dispositif de traitement de demande d'impression selon la revendication 2, comportant en outre des moyens d'exécution de commande normale (23) destinés à exécuter la commande reçue, et si les moyens d'estimation de commande (25) déterminent que la commande ne coïncide pas avec la correspondance commande-programme, lesdits moyens d'exécution de commande normale (23) exécutent la commande.

6. Dispositif de traitement de demande d'impression selon la revendication 1, dans lequel lesdits moyens de stockage de table commande-programme (18) et lesdits moyens de stockage de programme sont prévus à l'extérieur du serveur de transfert de fichier (12).

7. Dispositif de traitement de demande d'impression selon la revendication 6, dans lequel les contenus desdits moyens de stockage de table commande-programme (18) et desdits moyens de stockage de programme (17) peuvent être reprogrammés.

8. Dispositif de traitement de demande d'impression utilisant un serveur de transfert de fichier (12) fonctionnant de telle sorte que le serveur de transfert de fichier (12) reçoit une commande provenant d'un client de transfert de fichier (75), et délivre différentes commandes de demande à un serveur d'impression (14) en fonction de la commande reçue,
**caractérisé par**
le dispositif de traitement de demande d'impression qui comporte :
des moyens originaux de serveur de transfert de fichier (12) destinés à réaliser un traitement normal;
des moyens de stockage de table commande-programme (18) destinés à stocker au moins une correspondance entre une commande indicative d'un traitement spécial et un programme (17) devant être exécuté;
des moyens de stockage de programme destinés à stocker au moins un programme (17) devant être exécuté; et
des moyens d'interprétation commande-programme (16)
destinés à reconnaître de manière discriminative si la commande se rapporte au traitement normal ou au traitement spécial, et si la commande reçue est indicative du traitement normal, lesdits moyens d'interprétation commande-programme (16) commissionnent les moyens originaux de serveur de transfert de fichier (12) afin de réaliser le traitement normal, et si la commande reçue est indicative du traitement spécial, lesdits moyens d'interprétation
commande-programme (16) lisent un programme (12)
correspondant dans lesdits moyens de stockage de programme en fonction de la correspondance commande-programme, et
commissionnent le programme lu (17) afin de réaliser le traitement spécial.

9. Dispositif de traitement de demande d'impression selon la revendication 8, dans lequel lesdits moyens originaux de serveur de transfert de fichier (17) et lesdits moyens d'interprétation commande-programme (16) sont prévus dans ledit serveur de transfert de fichier (17), alors que lesdits moyens de stockage de table commande-programme (18) et lesdits moyens de stockage de programme sont prévus à l'extérieur dudit serveur de transfert de fichier (12).

10. Dispositif de traitement de demande d'impression selon la revendication 9, dans lequel les contenus desdits moyens de stockage de table commande-programme (18) et desdits moyens de stockage de programme peuvent être reprogrammés.

11. Procédé de traitement de demande d'impression dans lequel une commande est reçue d'un client de transfert de fichier (75), et différentes commandes de demande sont délivrées à un serveur d'impression (14) en fonction de la commande reçue,
**caractérisé par**
ledit procédé de traitement de demande d'impression qui comporte :
une étape de détermination du fait que la commande reçue correspond ou non à un programme désigné (17) à l'avance en utilisant une table commande-programme (18);
une étape de génération d'une fonction de lecture de programme lorsque la commande correspond au programme désigné (17);
une étape de lecture du programme désigné (17) suivant la fonction de lecture de programme; et
une étape d'exécution d'un traitement par le programme désigné (17) lu.

12. Procédé de traitement de demande d'impression selon la revendication 11, comportant en outre une étape de réalisation d'un traitement normal lorsque la commande ne correspond pas au programme désigné (17) ou bien la fonction de lecture de programme ne réussit pas à lire le programme désigné (17).

13. Dispositif de traitement de demande d'impression selon la revendication 1, dans lequel le dispositif de traitement de demande d'impression est une partie d'un système informatique ayant un premier ordinateur (72) servant de client de transfert de fichier (75) et de serveur d'impression (14).

14. Programme informatique comportant des moyens de code prévus pour réaliser les étapes de la revendication 11 ou de la revendication 12 lorsque ledit programme informatique est exécuté dans un ordinateur.
